# EUROPÄISCHE PATENTANMELDUNG

(11) **EP 2 037 201 A2**
(43) Veröffentlichungstag der Anmeldung: **18.03.2009**
(21) Anmeldenummer: 08104970.2
(22) Anmeldetag: 06.08.2008
(51) Int. Cl.: F28D 9/00, F28F 3/04, F28F 3/12, F02B 29/04

(54) **Ladeluftmodul für eine Verbrennungskraftmaschine**

(30) Priorität: 14.09.2007 DE 102007043992
(71) Anmelder: Pierburg GmbH, 41460 Neuss (DE)
(72) Erfinder: Hüsges, Hans-Jürgen, 47877, Willich (DE); Kühnel, Hans-Ulrich, 41239, Mönchengladbach (DE)
(74) Vertreter: Patentanwälte ter Smitten

(57) **Zusammenfassung**

Es wird ein Ladeluftmodul für eine Verbrennungskraftmaschine mit einem Ladeluftkühler (1) und äußeren Gehäuseteilen (9, 13, 14) vorgeschlagen, wobei der Ladeluftkühler (1) aus mehreren Strangpressprofilen (30, 31) aufgebaut ist, wobei je zwei Strangpressprofile (30, 31) einen Strömungskanal (36) für die Ansaugluft bilden, in den Rippen (37) der Strangpressprofile (30, 31) ragen. Erfindungsgemäß ist nun vorgesehen, dass diese Rippen (37) im Querschnitt abwechselnd in den Strömungskanal (36) ragen, wodurch der Abstand der Rippen (37) zueinander deutlich verkleinert und somit der Wirkungsgrad erhöht werden kann.

Ein derartiges Ladeluftmodul ist kostengünstig herzustellen und weist dabei einen hohen Wirkungsgrad auf. Des Weiteren ist es vorgesehen, in den äußeren Gehäuseteilen einen Bypasskanal 20 sowie eine Drosselklappe 16 vorzusehen.

## Beschreibung

Die Erfindung betrifft ein Ladeluftmodul für eine Verbrennungskraftmaschine mit äußeren Gehäuseteilen und einem Ladeluftkühler, in dem Strömungskanäle für die Ansaugluft und für eine Kühlflüssigkeit ausgebildet sind und welcher aus zumindest einem Wärmetauscherelement besteht, wobei die Strömungskanäle durch die äußeren Gehäuseteile gegenüber der Umgebung abgedichtet sind.

Ladeluftkühler in Verbrennungskraftmaschinen dienen zur Abkühlung der durch einen Lader komprimierten und aufgeheizten Verbrennungsluft, wodurch eine bessere Füllung der Zylinder und somit ein höher Liefergrad erreicht werden kann. Es sind sowohl Luft gekühlte als auch durch Kühlflüssigkeit gekühlte Ladeluftkühler bekannt.

So ist aus der DE 10 2005 053 924 A1 ein Ladeluftmodul für eine Verbrennungskraftmaschine bekannt, welches in das Saugrohr einer Verbrennungskraftmaschine eingebaut ist, wobei der Ladeluftkühler ein im Kreuzstrom durchströmter Kühler in Plattenbauweise ist, bei dem eine Kühlflüssigkeit zur Kühlung der Ladeluft dient. Sowohl die Wasser führenden Kanäle als auch die Luft führenden Kanäle werden durch äußere Gehäuseteile gegenüber der Umgebung abgedichtet.

Zusätzlich ist beispielsweise aus der DE 10 2004 047 901 ein Luft gekühltes Ladeluftmodul bekannt, bei dem der Ladeluftkühler über einen Bypass umgehbar ist.

Bekannt sind auch Wärmetauscher, die aus einem Strangpressprofil bestehen, dessen Enden durch äußere Gehäuseteile verschlossen werden, wobei im Strangpressprofil sowohl Kühlmittel als auch Gas führende Kanäle ausgebildet sind. Ein derartiger Wärmetauscher ist beispielsweise aus der DE 103 05 031 A1 bekannt. Derartige Wärmetauscher werden jedoch üblicherweise nicht als Ladeluftkühler verwendet, da keine ausreichende Kühlung der Ladeluft erreicht wird, da durch den Herstellungsprozess eine gewisse Breite der vom Gas bzw. vom Kühlmittel durchströmten Kanäle ebenso vorgegeben ist, wie eine gewisse Breite und ein definierter Abstand der die Kühlwirkung verbessernden Kühlrippen.

Die übrigen bekannten Ladeluftkühler sind entweder als Rohrkühler oder in Plattenbauweise ausgeführt, wodurch der Aufwand zur Herstellung eines derartigen Wärmetauschers aufgrund der Vielzahl von Einzelteilen relativ groß ist.

Es ist daher Aufgabe der Erfindung, ein Ladeluftmodul bereit zu stellen, mit welchem ein guter Wirkungsgrad erreicht wird und gleichzeitig eine kostengünstige Herstellung mit geringem Montageaufwand möglich ist.

Diese Aufgabe wird dadurch gelöst, dass der Ladeluftkühler aus zumindest zwei aufeinander angeordneten Strangpressprofilen besteht, die ein Wärmetauschelement bilden und an welchen Rippen ausgebildet sind, welche sich im Querschnitt zur Durchströmungsrichtung abwechselnd von den beiden Strangpressprofilen in dem Strömungskanal für die Ansaugluft erstrecken. Durch eine derartige Anordnung der beiden Strangpressprofile zueinander kann der Abstand zwischen den einzelnen Rippen extrem klein gehalten werden, wodurch der Wirkungsgrad des Kühlers im Vergleich zu bekannten Wärmetauscher mit Strangpressprofilen deutlich erhöht werden kann. Des Weiteren besteht ein derartiger Ladeluftkühler aus wenigen Einzelteilen, so dass der Aufwand beim Zusammenbau gering ist, was zu einer Kostenersparnis im Vergleich zu bekannten Ausführungen führt.

In einer hierzu weiter führenden Ausführungsform ist in jedem der Strangpressprofile ein Strömungskanal für die Kühlflüssigkeit ausgebildet, so dass ohne zusätzliche Bauteile eine Kühlung sichergestellt ist.

In einer hierzu wiederum weiterführenden Ausführungsform besteht das Wärmetauscherelement aus zumindest drei übereinander angeordneten Strangpressprofilen, von denen zumindest zwei identisch geformt sind. Durch diese identische Form können die Herstellkosten bei gewünschter Vergrößerung der Wärmeaustauschfläche relativ gering gehalten werden, da zusätzliche Werkzeugkosten eingespart werden können.

Eine weitere Verbesserung des Wirkungsgrades bei relativer Verringerung der Kosten wird auch erreicht, wenn das Wärmetauscherelement aus zumindest vier übereinander angeordneten Strangpressprofilen besteht, von denen jeweils zumindest zwei identisch geformt sind.

Vorzugsweise besteht der Ladeluftkühler aus zwei nebeneinander angeordneten Wärmetauscherelementen, wobei eine Einlasskammer in Strömungsrichtung der Ansaugluft betrachtet vor dem ersten Wärmetauscherelement angeordnet ist und eine Auslasskammer hinter dem zweiten Wärmetauscherelement angeordnet ist und am entgegen gesetzten Ende des Ladeluftkühlers eines der äußeren Gehäuseteile angeschlossen ist, welches eine Umlenkkammer bildet, so dass der Ladeluftkühler U-förmig durchströmbar ist. Hierdurch kann mit vielen baugleichen Profilen eine sehr große Wärmeaustauschfläche geschaffen werden, welche einen hohen Wirkungsgrad aufweist. Durch die U-förmige Durchströmung kann eine deutliche Verringerung des axial benötigten Bauraumes erreicht werden.

In einer hierzu weiter führenden Ausführungsform sind die Strömungskanäle für die Kühlflüssigkeit der beiden nebeneinander angeordneten Wärmetauscherelemente über zumindest eine Bohrung im Querschnitt jedes Strangpressprofils miteinander fluidisch verbunden, wobei zwischen den Strangpressprofilen Dichtungen angeordnet sind, die die Bohrungen der nebeneinander liegenden Strangpressprofile umgeben. Somit entsteht ein Strömungsfluss der Kühlflüssigkeit, welcher im Wesentlichen im Kreuzstrom zur Strömungsrichtung der Ansaugluft erfolgt. Durch einfache mechanische Bearbeitung können die Kühlwasserkanäle auf diese Weise miteinander verbunden werden. Somit ist keine Umlenkung der Kühlflüssigkeit jenseits der Strangpressprofile notwendig.

In einer bevorzugten Ausführung ist der Ladeluftkühler über einen Bypass umgehbar, der durch eine Öffnung in einer Trennwand gebildet ist, die zwischen der Einlasskammer und der Auslasskammer angeordnet ist, wobei die Öffnung durch eine Bypassklappe beherrscht ist. Insbesondere bei Kaltstart der Brennkraftmaschine kann somit der Ladeluftkühler zur schnelleren Aufheizung eines Katalysators umgangen werden.

Eine zusätzliche kompakte Bauweise erhält man dadurch, dass in Strömungsrichtung betrachtet hinter der Auslasskammer des Ladeluftmoduls ein Drosselklappenstutzen mit einer darin angeordneten Drosselklappe angeordnet ist.

Ein derartiges Ladeluftmodul vereinigt somit mehrere Funktionen im Ansaugbereich in einem Gehäuse, wobei die gewählten Ausführungen kostengünstig herstellbar sind und gleichzeitig der Ladeluftkühler einen hohen Wirkungsgrad aufweist.

Ein Ausführungsbeispiel ist in den Zeichnungen dargestellt und wird nachfolgend beschrieben.
- Figur 1: zeigt eine Seitenansicht eines erfindungsgemäßen Ladeluftmoduls in geschnittener Darstellung,
- Figur 2: zeigt einen Querschnitt des Ladeluftkühlers des Ladeluftmoduls aus Figur 1,
- Figur 3: zeigt die Strangpressprofile zum Aufbau eines Wärmetauscherele- ments eines Ladeluftkühlers gemäß Figur 2 in gesprengter Darstellung.

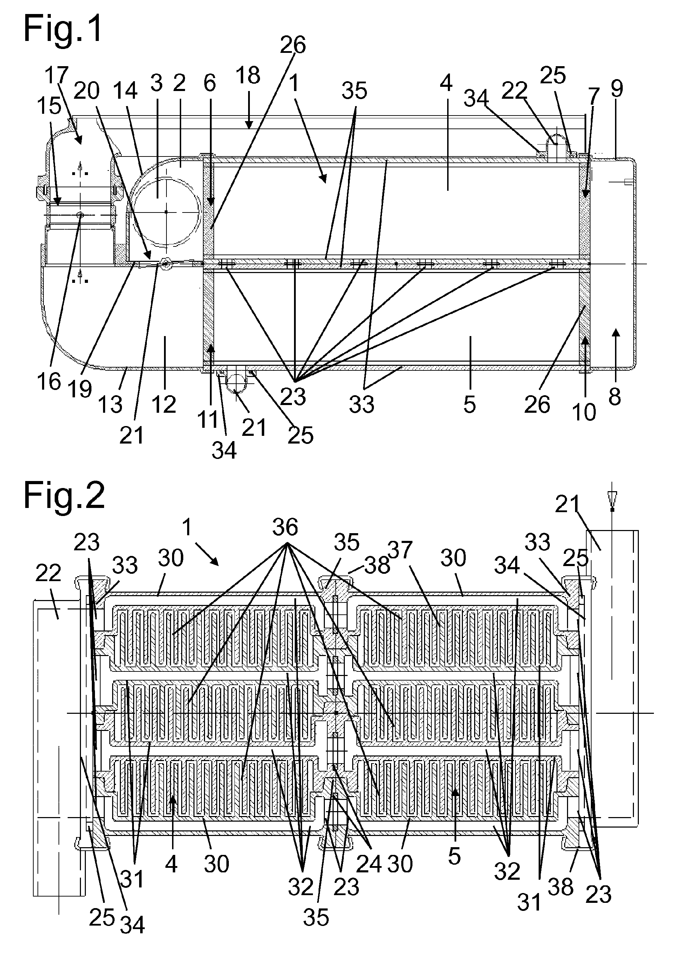

Das in Figur 1 dargestellte Ladeluftmodul besteht aus einem Ladeluftkühler 1, der über einen in eine Einlasskammer 2 führenden Einlasskanal 3 mit Ansaugluft versorgt wird.

Der Ladeluftkühler 1 besteht aus zwei Wärmetauscherelementen 4, 5, welche in entgegen gesetzter Richtung von der Ansaugluft durchströmt werden. Die Wärmetauscherelemente 4, 5 sind an ihrem jeweiligen Einlass- und Auslassende bezüglich der Strömung der Ansaugluft offen ausgeführt, so dass diese vom Einlass 6 des ersten Wärmetauscherelements 4 zum Auslass 7 des Wärmetauscherelementes 4 strömt und dort in eine Umlenkkammer 8 gelenkt wird, die durch ein äußeres Gehäuseteil 9 gegenüber der Umgebung abgegrenzt ist. Aus dieser Umlenkkammer 8 strömt die Ansaugluft über einen Einlass 10 des zweiten Wärmetauscherelements 5 zu einem Auslass 11 des Wärmetauscherelementes 5. Hinter dem Auslass 11 befindet sich eine Auslasskammer 12, welche durch ein weiteres äußeres Gehäuseteil 13 ebenso wie die Einlasskammer 2 durch ein weiteres äußeres Gehäuseteil 14 gegenüber der Umgebung abgegrenzt ist.

An die Auslasskammer 12 schließt sich ein Drosselklappenstutzen 15 zur Regulierung der Ansaugluftmenge an. Hierzu dient eine Drosselkappe 16 im Luftansaugkanal 17, der durch den Drosselklappenstutzen 15 gebildet wird. Von hier aus strömt die Ansaugluft weiter zum Saugrohr 18.

Zwischen der Einlasskammer 2 und der Auslasskammer 12 des Ladeluftmoduls befindet sich eine Trennwand 19, in der eine Öffnung 20 ausgebildet ist, die von einer Bypassklappe 21 beherrscht wird. Durch Öffnen der Bypassklappe 21 kann somit der angesaugte Luftstrom über die als Bypass dienende Öffnung 20 am Ladeluftkühler 1 vorbeigeführt werden, wodurch insbesondere nach dem Kaltstart einer Verbrennungskraftmaschine eine schnellere Aufheizung eines Katalysators erreicht werden kann.

Des Weiteren sind in Figur 1 ein Einlassrohr 21 sowie ein Auslassrohr 22 für die Kühlflüssigkeit des Ladeluftkühlers 1 dargestellt. Das Einlassrohr 21 befindet sich dabei im Bereich des Auslasses 11 des zweiten Wärmetauscherelementes 5 und das Auslassrohr 22 im Bereich des Auslasses 7 des ersten Wärmetauscherelementes 4. Um für die beiden Wärmetauscherelemente 4, 5 eine Verbindung zwischen dem Einlassrohr 21 und dem Auslassrohr 22 zu schaffen und für eine Durchströmung der Wärmetauschelemente 4, 5 mit Kühlflüssigkeit zu sorgen, sind im Bereich der Kühlflüssigkeit führenden Strömungskanäle zwischen den Wärmetauscherelementen 4, 5 jeweils Bohrungen 23 ausgebildet, über die die Kühlflüssigkeitskanäle der beiden Wärmetauscherelemente 4, 5 miteinander fluidisch verbunden sind. Zwischen den Bohrungen 23 und somit zwischen den beiden Wärmetauscherelementen 4, 5 sind zur Abdichtung Dichtungen 24 angeordnet, die die Bohrungen 23 umgeben.

Auch das Einlassrohr 21, sowie das Auslassrohr 22 sind über Flanschplatten 34 an den Wärmetauscherelementen 4, 5 unter Zwischenlage von Dichtungen 25 befestigt.

Des weiteren sind an den jeweiligen Ein- und Auslässen 6, 7, 10, 11 der Wärmetauscherelemente 4, 5 in Höhe der Kühlflüssigkeitskanäle Platten 26 angeordnet, über die die Strömungskanäle der Kühlflüssigkeit an den axialen Enden der Wärmetauscherelementen 4, 5 dicht verschlossen werden. Diese können auf unterschiedliche Weise an den Wärmetauscherelementen 4, 5 beispielsweise durch Kleben befestigt werden.

Die Figur 2 zeigt einen Querschnitt des Ladeluftkühlers 1, und somit der Wärmetauscherelemente 4, 5, welche in vorliegender Darstellung nebeneinander angeordnet sind. Jedes dieser Wärmetauscherelemente 4, 5 besteht aus insgesamt vier Strangpressprofilen 30, 31, welche übereinander angeordnet sind. Zur Verminderung der Werkzeugkosten sind dabei jeweils das in der Ansicht obere Strangpressprofil 30 baugleich mit dem unteren Strangpressprofil 30 ausgeführt. Gleiches wurde auch bei den beiden mittleren Strangpressprofile 31 verwirklicht.

In jedem dieser Strangpressprofile 30, 31 ist ein Strömungskanal 32 für die Kühlflüssigkeit ausgebildet. Nach dem Strangpressen sind diese Strömungskanäle 32 an ihren seitlichen Enden geschlossen und an ihren Kopf- bzw. Fußenden und der Herstellung offen. Wie bereits erwähnt, werden die axialen Enden durch die Platten 26 verschlossen, während, wie in Figur 2 zu erkennen ist, die Seitenwände 33 mit Bohrungen versehen werden, durch die eine fluidische Verbindung zwischen den jeweiligen Strömungskanälen 32 für die Kühlflüssigkeit und dem Einlassrohr 21 bzw. beim ersten Wärmetauscherelement 4 und dem Auslassrohr 22 hergestellt wird.

Wie bereits in der Beschreibung zu Figur 1 erwähnt, ist dieses Einlassrohr 21 bzw. das Auslassrohr 22 unter Zwischenlage einer Dichtung 25 mittels einer Flanschplatte 34 an den Wärmetauscherelementen 4, 5 befestigt. Diese umlaufende Dichtung 25 ist auch in Figur 2 an der Flanschplatte 34 ersichtlich. Somit enthält jedes Strangpressprofil 30, 31 an der Seite der im zusammen gebauten Zustand außen liegenden Seitenwänden 33 jeweils eine Bohrung 23, während im Bereich der im zusammengebauten Zustand innen liegenden Seitenwänden 35 über die axiale Baulänge der Strangpressprofile verteilt mehrere Bohrungen 23 angeordnet sind, wobei jeweils die Bohrungen 23 nebeneinander liegender Strangpressprofile 30, 31 so zueinander angeordnet sind, dass sie im gleichen Abstand zum axialen Ende und in gleicher Höhe angeordnet sind, wodurch durch Zwischenlage der Dichtungen 24 eine nach außen dichte Verbindung zwischen den Strömungskanälen 32 für die Kühlflüssigkeit geschaffen wird.

Zwischen den Strangpressprofilen 30, 31 werden Strömungskanäle 36 für die Ansaugluft gebildet, wobei jeweils zwei übereinander liegende Strangpressprofile 30, 31 durch den Zusammenbau einen Strömungskanal 36 für die Ansaugluft bilden. Erfindungsgemäß ist nun vorgesehen, dass die Rippen der übereinander liegenden Strangpressprofile 30, 31 im Querschnitt zur Strömungsrichtung abwechselnd in den Strömungskanal 36 ragen. Hierdurch kann der Abstand zwischen den Rippen 37 deutlich kleiner gehalten werden als bei einem einstückig hergestellten Strömungskanal. Dies führt zu einem deutlich verbesserten Wirkungsgrad, insbesondere da keine Versottung im Ansaugbereich zu erwarten ist.

Im vorliegenden Ausführungsbeispiel sind die Wärmetauscherelemente 4, 5 miteinander sowie die Wärmetauscherelemente 4, 5 mit den Flanschplatten 34 über Klammern 38 verbunden. Selbstverständlich ist auch eine andere Verbindungstechnik wählbar.

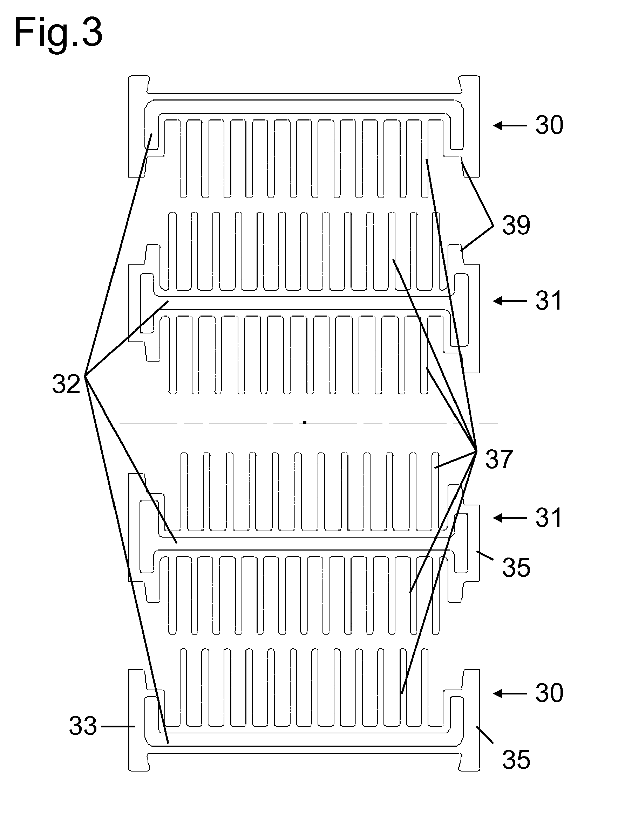

Figur 3 zeigt noch einmal die Form der Strangpressprofile 30, 31 vor der mechanischen Bearbeitung. Es ist dabei zu erkennen, dass das obere und untere Strangpressprofil 30 gleich ausgeführt sind und lediglich das untere im Vergleich zum oberen um 180° um die Längsachse gedreht ist. Gleiches gilt auch für die beiden mittleren Strangpressprofile 31. Die Rippen 37 sind so in den Profilen ausgeführt, dass sie nach dem Zusammenbau in der gewünschten Form ineinander greifen, also im Querschnitt abwechselnd vom oberen und unteren den Strömungskanal 36 bildenden Strangpressprofil 30, 31 in den Strömungskanal 36 ragen.

Auch wird ersichtlich, dass die Oberflächen von Fügestellen 39 zur Verbindung der Strangpressprofile 30, 31 leicht schräg gestellt sind, wodurch eine Klebemasse beim Zusammensetzen nicht abgestreift wird. Ein Fügen kann beispielsweise mittels eines Silikonklebers erfolgen.

Es wird somit ein Ladeluftmodul aus wenigen Bauteilen geschaffen, welches einen hohen Wirkungsgrad aufweist und bezüglich seiner Größe optimal an die gegebenen Erfordernisse angepasst werden kann. Die Herstellkosten bleiben dabei sowohl durch die Verwendung von Strangpressprofilen als auch durch die Verwendung baugleicher Werkzeuge zur Herstellung von mehreren Strangpressprofilen äußerst gering im Vergleich zu bekannten Ausführungen.

Selbstverständlich ist ein erfindungsgemäßes Ladeluftmodul nicht auf die beschriebene Ausführungsform beschränkt. So ist insbesondere die Verwendung einer geringeren oder höheren Anzahl an Strangpressprofilen ebenso denkbar, wie eine unterschiedliche Anordnung der Ein- und Auslässe der Kühlflüssigkeit sowie der Ausführungen bezüglich der äußeren Gehäuseteile.

## Patentansprüche

1. Ladeluftmodul für eine Verbrennungskraftmaschine mit äußeren Gehäuseteilen und einem Ladeluftkühler, in dem Strömungskanäle für die Ansaugluft und für die Kühlflüssigkeit ausgebildet sind und welcher aus zumindest einem Wärmetauscherelement besteht, wobei die Strömungskanäle durch die äußeren Gehäuseteile gegenüber der Umgebung abgedichtet sind, **dadurch gekennzeichnet, dass** der Ladeluftkühler (1) aus zumindest zwei aufeinander angeordneten Strangpressprofilen (30; 31) besteht, die ein Wärmetauscherelement (4; 5) bilden und an welchen Rippen (37) ausgebildet sind, welche sich im Querschnitt zur Durchströmungsrichtung abwechselnd von beiden Strangpressprofilen (30; 31) in den Strömungskanal (36) für die Ansaugluft erstrecken.

2. Ladeluftmodul für eine Verbrennungskraftmaschine nach Anspruch 1, **dadurch gekennzeichnet, dass** in jedem der Strangpressprofile (30; 31) ein Strömungskanal (32) für die Kühlflüssigkeit ausgebildet ist.

3. Ladeluftmodul für eine Verbrennungskraftmaschine nach Anspruch 1 oder 2, **dadurch gekennzeichnet, dass** das Wärmetauscherelement (4; 5) aus zumindest drei übereinander angeordneten Strangpressprofilen (30; 31) besteht, von denen zumindest zwei identisch geformt sind.

4. Ladeluftmodul für eine Verbrennungskraftmaschine nach einem der vorhergehenden Ansprüche, **dadurch gekennzeichnet, dass** das Wärmetauscherelement (4; 5) aus zumindest vier übereinander angeordneten Strangpressprofilen (30; 31) besteht, von denen jeweils zumindest zwei identisch geformt sind.

5. Ladeluftmodul für eine Verbrennungskraftmaschine nach einem der vorhergehenden Ansprüche, **dadurch gekennzeichnet, dass** der Ladeluftkühler (1) aus zwei nebeneinander angeordneten Wärmetauscherelementen (4; 5) besteht, wobei eine Einlasskammer (2) in Strömungsrichtung der Ansaugluft betrachtet vor dem ersten Wärmetauscherelement (4) angeordnet ist und eine Auslasskammer (12) hinter dem zweiten Wärmetauscherelement (5) angeordnet ist und am entgegen gesetzten Ende des Ladeluftkühlers (1) eines der äußeren Gehäuseteile (9) angeschlossen ist, welches eine Umlenkkammer (8) bildet, so dass der Ladeluftkühler (1) U-förmig durchströmbar ist.

6. Ladeluftmodul für eine Verbrennungskraftmaschine nach Anspruch 5, **dadurch gekennzeichnet, dass** die Strömungskanäle (32) für die Kühlflüssigkeit der beiden nebeneinander angeordneten Wärmetauscherelemente (4; 5) über zumindest eine Bohrung (23) im Querschnitt jedes Strangpressprofils (30; 31) miteinander fluidisch verbunden, wobei zwischen den Strangpressprofilen (30; 31) Dichtungen (24) angeordnet sind, die die Bohrungen (23) der nebeneinander liegenden Strangpressprofile (30;31) umgeben.

7. Ladeluftmodul für eine Verbrennungskraftmaschine nach einem der vorhergehenden Ansprüche, **dadurch gekennzeichnet, dass** der Ladeluftkühler (1) über einen Bypass umgehbar ist, der durch eine Öffnung (20) in einer Trennwand (19) gebildet ist, die zwischen der Einlasskammer (2) und der Auslasskammer (12) angeordnet ist, wobei die Öffnung (20) von einer Bypassklappe (21) beherrscht ist.

8. Ladeluftmodul für eine Verbrennungskraftmaschine nach einem der vorhergehenden Ansprüche, **dadurch gekennzeichnet, dass** in Strömungsrichtung der Ansaugluft betrachtet hinter der Auslasskammer (12) ein Drosselklappenstutzen (15) mit einer darin angeordneten Drosselklappe (16) angeordnet ist.
